# FASCICULE DE BREVET EUROPEEN

(11) **EP 3 963 296 B1**
(45) Date de publication et mention de la délivrance du brevet: **09.10.2024**
(21) Numéro de dépôt: 20721616.9
(22) Date de dépôt: 30.04.2020
(51) Int. Cl.: G01G 3/12, G01F 23/20, G01G 3/18, G01G 21/23

(54) **SYSTÈMES ET PROCÉDÉS DE MESURE DU NIVEAU DE REMPLISSAGE D'UN SILO**
SYSTEME UND VERFAHREN ZUR FÜLLSTANDSMESSUNG EINES SILOS
SYSTEMS AND METHODS FOR MEASURING THE FILLING LEVEL OF A SILO

(30) Priorité: 30.04.2019 FR 1904594
(43) Date de publication de la demande: 09.03.2022
(73) Titulaire: Nanolike, 31670 Labège (FR)
(72) Inventeur: DIGIANANTONIO, Lucas, 31000 Toulouse (FR); BOIS, Jean-Jacques, 31300 Toulouse (FR)
(74) Mandataire: BARRE LAFORGUE
(86) Numéro de dépôt international: PCT/EP2020/062024
(87) Numéro de publication internationale: WO 2020/221857

(56) Documents cités:
- WO-A1-2006/105679
- WO-A1-2008/037095
- WO-A1-2018/039787
- CA-A1- 2 371 068
- CN-A- 109 178 966
- ES-U- 1 062 520
- JP-A- H09 236 479
- US-A- 4 064 744
- US-A- 5 493 903
- US-A1- 2014 157 889
- US-A1- 2016 236 902
- ANONYMOUS: "SiloWeigh - Silex Sensor Installation User Manual", AYSIX TECHNOLOGIES / USER'S MANUAL, 1 September 2011 (2011-09-01), XP055883228, Retrieved from the Internet <URL:https://www.environmental-expert.com/downloads/siloweigh-silex-sensor-installation-user-manual-416115?callBackMethodJs=openFlipbook> [retrieved on 20220125]
- ANONYMOUS: "Sensor por deformación SD1000", DINACELL - FICHA TÉCNICA, 28 February 2018 (2018-02-28), XP055883222, Retrieved from the Internet <URL:http://www.dinacell.com/> [retrieved on 20220125]
- ANONYMOUS: "The StrainCell 360° strain sensor to a weighing of silos and industrial facilities afterwards", STRAIN SYSTEM EUROPE - FLYER, 1 January 2014 (2014-01-01), XP055883217, Retrieved from the Internet <URL:http://www.strainsystems.eu/english/media/StrainCell-Flyer-k.pdf> [retrieved on 20220125]
- ANONYMOUS: "Transductor de fuerza DF30/RF", DINACELL - FICHA TÉCNICA, 14 September 2018 (2018-09-14), XP055883214, Retrieved from the Internet <URL:http://www.dinacell.com/> [retrieved on 20220125]
- ANONYMOUS: "VersaLog brochure", ACCSENSE.COM, 19 June 2015 (2015-06-19), pages 1 - 2, XP093021020, Retrieved from the Internet <URL:https://accsense.com/wp-content/uploads/2018/07/VersaLog-BR-2.pdf> [retrieved on 20230206]
- ANONYMOUS: "Silo Weight Monitoring and Control", SCALE-TRON INC., 12 June 2014 (2014-06-12), pages 1 - 6, XP093021016, Retrieved from the Internet <URL:https://www.environmental-expert.com/downloads/siloweigh-silex-sensor-installation-user-manual-416115?callBackMethodJs=openFlipbook> [retrieved on 20230206]
- ANONYMOUS: "OM-DAQXL Multi-Channel Universal Input Touch Screen Data Logger", INSTRUMENTATION.COM, 1 January 2017 (2017-01-01), pages 1 - 85, XP093020999, Retrieved from the Internet <URL:https://instrumentation.com/pdfs/M5570.pdf> [retrieved on 20230206]
- ANONYMOUS: "GP2Y0A41SK0F distance sensor datasheet", POLOLU, 1 August 2013 (2013-08-01), pages 1 - 8, XP093020980, Retrieved from the Internet <URL:https://www.pololu.com/file/0J713/GP2Y0A41SK0F.pdf> [retrieved on 20230206]
- ANONYMOUS: "IVQs in Electrical and Electronic Engineering", CITY & GUILDS, 1 September 2009 (2009-09-01), pages 1 - 96, XP093020967, Retrieved from the Internet <URL:https://cdn.cityandguilds.com/productdocuments/engineering/electrical_and_electronic/8030/8030_level_2/centre_documents/8030-200_l2_qualification_handbook_v1.pdf> [retrieved on 20230206]

## Description

### Domaine technique

L'invention concerne la mesure du niveau de remplissage de silos de stockage et de mélange de matériau en vrac. Plus particulièrement, l' invention concerne un système et un procédé de gestion à distance des stocks de matériau en vrac présents dans de tels silos.

Le document WO2008037095 décrit un système similaire.

### Technique antérieure

Dans les domaines qui utilisent des silos, les fournisseurs de matériau en vrac se chargent de remplir, à la demande, les silos de chaque exploitation. Dans la pratique, un ou une propriétaire d'une exploitation se rend souvent compte au dernier moment qu'il est en rupture de stock d'un matériau en vrac. Dans ce cas, le ou la propriétaire demande alors à être livré en urgence, ce qui induit des surcoûts de logistique importants.

Pour résoudre ce problème, on a envisagé d'instaurer un contrôle à distance de l'état de remplissage des silos de l'exploitation. Dans ce cas, il n'est pas nécessaire de déterminer le poids ou la masse des matériaux en vrac présent dans les silos. En effet, il suffit généralement de savoir le silo est vide, plein ou partiellement rempli.

On connaît de CA2371068A1 un système de contrôle à distance de l' état de remplissage de bacs de chargement comme les bacs à copeaux de bois. Pour un bac de chargement comprenant quatre poutres de support, le système de CA2371068A1 utilise un capteur de charge sur chaque poutre de support. Dans le système de CA2371068A1, chaque capteur de charge est formé dans une plaque carrée qui comporte un trou de montage à chacun de ces quatre coins. Le système de CA2371068A1 utilise un microcontrôleur disposé à proximité des capteurs de charge, afin de réaliser une moyenne de leurs mesures. Ensuite, le microcontrôleur communique l'état de chargement ou de remplissage du bac de chargement à un serveur web ayant une interface utilisateur permettant de rendre disponible sur Internet cet état.

Cependant, l'utilisation d'un tel système présente un coût élevé du fait de la multiplicité des capteurs à installer dans une même exploitation. En effet, dans l'art antérieur le nombre de capteurs à installer dépend du nombre de poutres de support du bac de chargement.

En outre, l'utilisation d'un tel système présente un coût élevé du fait de la multiplicité des microcontrôleurs à entretenir. En effet, l'art antérieur nécessite au moins un microcontrôleur par bac de chargement pour en déterminer l'état de chargement ou de remplissage.

Par ailleurs, selon la géométrie des poutres de support du bac de chargement, les dimensions du capteur de charge doivent être modifiées.

### Résumé de l'invention

L'invention vise à pallier ces inconvénients.

L'invention vise en particulier à proposer un système peu onéreux et flexible pour déterminer une donnée représentative du taux de remplissage d'un silo. Ainsi, selon l'invention, l'utilisation d'un système du type métrologique n'est pas nécessaire pourvu que la fiabilité du système proposé soit assurée.

À ce titre, les inventeurs ont constaté que l'utilisation d'un unique capteur de déformation sur un seul pied d'un silo suffisait à permettre une détermination fiable du taux de remplissage dudit silo et/ou de la variation de son taux de remplissage.

Ainsi, l'invention concerne un système de mesure du niveau de remplissage d'un silo de stockage et de mélange d'au moins un matériau en vrac, conforme à la revendication 1. Le système est prévu pour fonctionner avec un silo qui est pourvu d'une pluralité de pieds d' appui au sol.

Dans une mise en oeuvre particulière, le capteur de déformation comprend un connecteur relié électriquement au circuit électronique, le connecteur étant prévu pour relier de manière filaire le capteur de déformation au premier moyen de communication sans fil.

Dans une deuxième mise en oeuvre particulière, le système comprend en outre un capteur de température prévu pour mesurer au moins une température à proximité du pied d'appui du silo, convertir la température en valeur de température et ajouter la valeur de température au signal de mesure.

Dans une troisième mise en oeuvre particulière, le système comprend en outre un capteur de géolocalisation prévu pour déterminer une position géographique du capteur de déformation, convertir la position géographique en valeur de position géographique et ajouter la valeur de position géographique au signal auxiliaire.

Dans une quatrième mise en oeuvre particulière, lequel le processeur détermine le niveau de remplissage du silo en fonction, en outre, d'une vitesse de variation des valeurs de déformations détectées.

Dans une cinquième mise en oeuvre particulière, le traitement numérique du signal de mesure et du signal auxiliaire par processeur comprend la détermination d'un ensemble de paramètres correctifs qui permettent de prendre en compte l'effet de la température sur le pied d 'appui du silo et l'effet du temps sur les performances d'acquisition du capteur de déformation.

Dans une sixième mise en oeuvre particulière, le capteur de déformation comporte un corps d'épreuve qui comprend deux sections d'extrémité à travers lesquelles le corps d'épreuve est fixé au pied d' appui du silo.

Dans un exemple de la sixième mise en oeuvre particulière, le capteur de déformation est fixé au pied d'appui du silo par des vis.

Dans un autre exemple de la sixième mise en oeuvre particulière, le capteur de déformation peut être fixé au pied d'appui du silo par de la colle.

Dans une septième mise en oeuvre particulière, le système comprend en outre un boitier prévu pour renfermer une section médiane du corps d'épreuve et le connecteur, le connecteur faisant saillie du boitier.

L'invention concerne également un procédé de mesure du niveau de remplissage d'un silo de stockage et de mélange d'au moins un matériau en vrac, conforme à la revendication 11. Le procédé est prévu pour fonctionner avec un silo qui est pourvu d'une pluralité de pieds d' appui au sol.

### Brève description des dessins

[Fig. 1] La figure 1 représente un système de mesure du niveau d'un silo, selon l'invention.
[Fig. 2A] La figure 2A représente un corps d'épreuve d'un capteur de déformation, selon l'invention.
[Fig. 2B] La figure 2B représente une première vue agrandie de la figure 2A.
[Fig. 2C] La figure 2C représente une deuxième vue agrandie de la figure 2A.
[Fig. 3] La figure 3 représente un capteur de déformation, selon l' invention.
[Fig. 4] La figure 4 représente un procédé de mesure du niveau d'un silo, selon l'invention.

Les figures ne respectent pas nécessairement les échelles, notamment en épaisseur, et ce à des fins d'illustration.

### Description des modes de réalisation

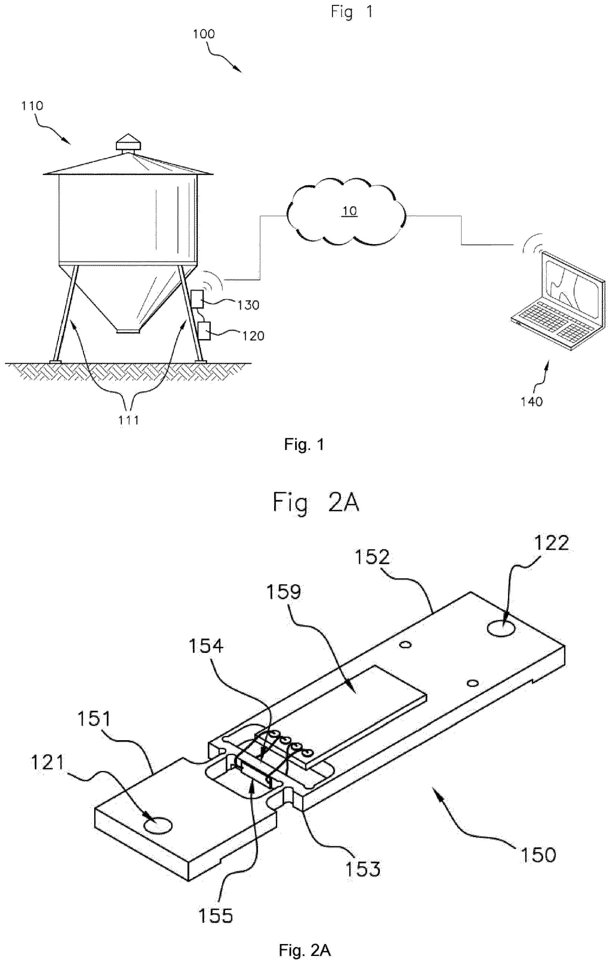

La figure [Fig. 1] illustre un système 100 de mesure du niveau de remplissage d'un silo 110 prévu pour le stockage et/ou le mélange d'au moins un matériau en vrac.

Dans l'invention, le silo 110 est de type connu. En outre, on entend par matériau en vrac, tout matériau adapté pour pouvoir s'écouler. Par exemple, le matériau en vrac est choisi dans le groupe formé des liquides et des matériaux pulvérulents. De manière particulière, les matériaux pulvérulents comprennent les solides pulvérulents.

Dans l'invention, le silo 110 est pourvu d'une pluralité de pieds d' appui 111 au sol. Dans l'exemple de la figure [Fig. 1], le silo 110 comprend deux pieds d'appui 111 au sol. Toutefois, selon l'invention, le silo 110 peut comprendre plus de deux pieds d'appui 111 au sol sans nécessiter de modifications substantielles de l'invention.

Le système 100 comprend un unique capteur de déformation 120, un premier moyen de communication sans fil 130 et un serveur distant 140.

Les inventeurs ont choisi d'utiliser, pour chaque silo, un seul capteur de déformation à sensibilité accrue. Le capteur de déformation selon l' invention est du type de celui décrit dans US 4 064 744 de Kistler. Toutefois, dans l'invention on utilise ce capteur d'une manière différente de celle préconisée par US 4 064 744. En effet, dans la pratique il est recommandé d'utiliser plusieurs variantes du capteur selon le type de pied de silo. Ce n'est pas le cas dans l'invention où l'on utilise une seule forme du capteur, quel que soit le type de pied de silo. En effet, comme expliqué ci-dessous, l'ensemble des traitements de mesure sont déportés hors du capteur. Il n'est donc pas nécessaire de modifier ses dimensions selon le type de pied d'appui du silo.

Dans la figure [Fig. 1], le capteur de déformation 120 est prévu pour être fixé sur un seul pied d'appui 111 du silo 110 parmi la pluralité des pieds d'appui 111 du silo 110. Ainsi, dans l'invention, le capteur de déformation 120 n'entre pas en contact avec le contenu du silo 110.

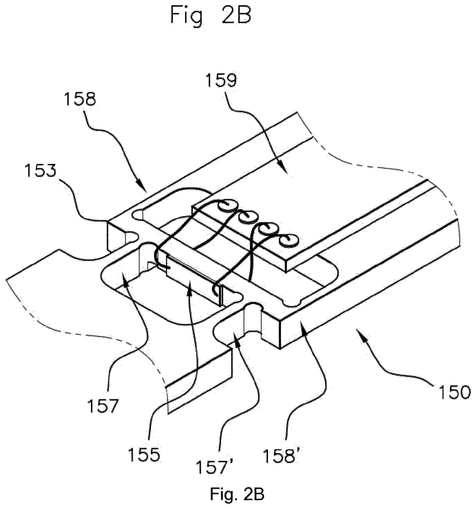

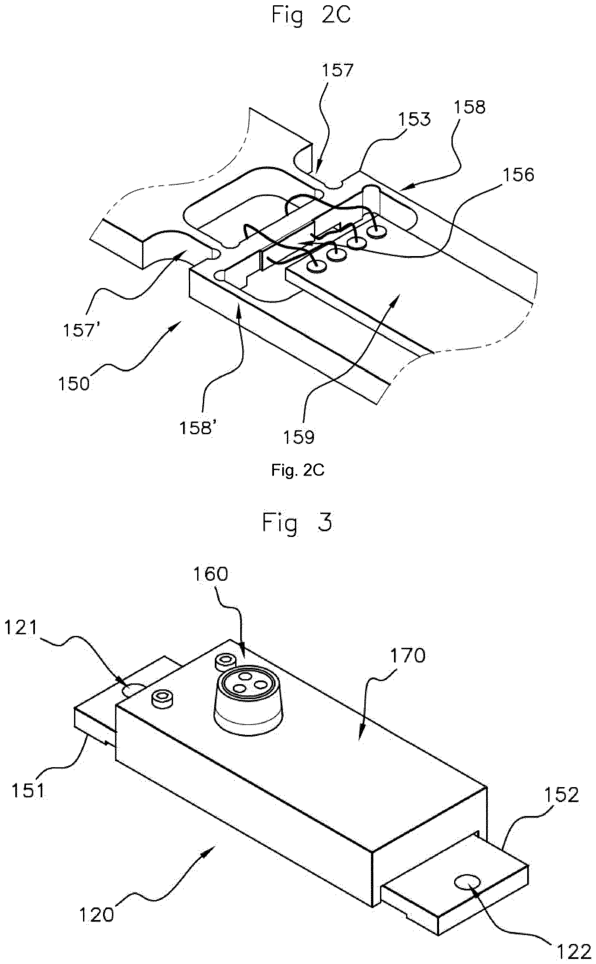

Pour cela, comme illustré dans les figures [Fig. 2A], [Fig. 2B] et [Fig. 2C], le capteur de déformation 120 comporte un corps d'épreuve qui comprend deux sections d'extrémité 151, 152 à travers lesquelles le corps d'épreuve peut être fixé au pied d'appui 111 du silo 110.

Dans un exemple, on fixe le capteur de déformation 120 au pied d' appui 111 du silo 110 par des vis passant par les trous de fixations 121, 122.

Dans un autre exemple, on fixe le capteur de déformation 120 au pied d 'appui 111 du silo 110 par d'autres moyens de fixation ou d'assemblage autres, comme de la colle.

De préférence, on fixe le capteur de déformation 120 à un endroit du pied d'appui 111 du silo 110 où l'on peut mesurer une déformation maximale du pied d'appui 111 du silo 110.

Dans l'invention, le capteur de déformation 120 est fixé de telle sorte qu'il puisse détecter les déformations du pied d'appui 111 en réponse à l'introduction ou à l'extraction du matériau en vrac. Selon la disposition du capteur de déformation 120 sur le pied d'appui 111 du silo 110, le capteur de déformation 120 peut détecter les déformations longitudinales et/ou transversales subies par le pied d'appui 111 du silo 110.

Pour cela, le corps d'épreuve se présente sous la forme d'une plaque formée d'un seul tenant avec une section transversale généralement rectangulaire.

Dans une mise en oeuvre particulière, la plaque qui forme le corps d' épreuve comprend au moins un matériau apte à présenter des déformations finies homogènes ou non homogènes et qui est choisi dans le groupe formé des matériaux métalliques, des matériaux polymères, des matériaux céramiques et de leurs composites.

Dans une autre mise en oeuvre particulière, la plaque qui forme le corps d'épreuve présente une forme globalement parallélépipédique rectangle avec une largeur supérieure à 0,5 cm - notamment inférieure à 2,5 cm, par exemple de l'ordre de 1,5 cm à 2 cm-, une longueur supérieure à 5 cm - notamment inférieure à 10 cm, par exemple de l'ordre de 6,5 cm à 8 cm- et une hauteur supérieure à 0,15 cm - notamment inférieure à 0,4 cm, par exemple de l'ordre de 0,28 cm à 0,3 cm-.

Par ailleurs, le corps d'épreuve comprend une section médiane 153 qui comporte une tige de déformation 154.

La tige de déformation 154 est disposée sensiblement perpendiculaire à l'axe du corps d'épreuve et reliée mécaniquement de façon séparée aux sections d'extrémité 151, 152. Dans l'exemple des figures [Fig. 2B] et [Fig. 2C], la tige de déformation 154 est reliée aux sections d' extrémité 151, 152 par l'intermédiaire de deux paires de tiges de liaison 157, 157', 158, 158' disposées symétriquement, mais espacées de manière égale.

En outre, la tige de déformation 154 comprend au moins deux éléments résistifs 155, 156 sensibles à la déformation.

Dans une mise en oeuvre particulière, on colle les deux éléments résistifs 155, 156 sensibles à la déformation à la tige de déformation 154. Bien sûr, on peut utiliser tout type de colle comme, par exemple, de la colle époxy ou une colle cyanoacrylate.

Dans un exemple, les éléments résistifs 155, 156 sensibles à la déformation sont des jauges de déformation semi-conductrices.

En pratique, chaque élément résistif sensible à la déformation présente au moins une caractéristique électrique qui varie en fonction de sa déformation.

Ainsi, en fixant les éléments résistifs 155, 156 sensibles à la déformation sur la tige de déformation 154, la caractéristique électrique varie en fonction d'un état de déformation de la tige de déformation 154. Dit autrement, le capteur de déformation 120 est ainsi configuré pour convertir en signaux électriques l'allongement, le raccourcissement, le fléchissement ou le flambage que subit le pied d' appui 111 sous l'effet d'un effort de traction ou de compression produit par l'introduction ou à l'extraction du matériau en vrac.

Le capteur de déformation 120 est en outre prévu pour convertir les déformations détectées en valeurs de déformation et pour générer au moins un signal de mesure qui comprend les valeurs de déformation.

Pour cela, comme illustré dans les figures [Fig. 2A], [Fig. 2B] et [Fig. 2C], le capteur de déformation 120 comprend en outre un circuit électronique 159 relié électriquement aux éléments résistifs 155, 156 sensibles à la déformation. En pratique, chaque élément résistif 155, 156 sensible à la déformation présente des plots de connexion électrique pour être reliés électriquement au circuit électronique.

Dans l'invention, le circuit électronique 159 est adapté pour mesurer la caractéristique électrique de chaque élément résistif sensible à la déformation, et pour générer le signal de mesure.

Dans une mise en oeuvre particulière, le circuit électronique 159 génère un signal de mesure pour chaque valeur de déformation.

Dans une autre mise en oeuvre particulière, le circuit électronique 159 génère un signal de mesure pour une pluralité de valeurs de déformation.

Dans une mise en oeuvre particulière, le circuit électronique 159 est en outre adapté pour générer un signal auxiliaire qui est associé au signal de mesure.

Dans une mise en oeuvre particulière, le circuit électronique 159 génère un signal auxiliaire pour chaque signal de mesure.

Dans un exemple, le circuit électronique 159 est adapté pour ajouter un identifiant du silo 110 au signal auxiliaire. De cette manière, comme le signal de mesure est associé au signal auxiliaire, on peut distinguer les signaux de mesure associés à des silos différents.

Dans un exemple, le circuit électronique 159 est adapté pour ajouter au signal auxiliaire, un horodatage des valeurs de déformation acquises. De cette manière, comme le signal de mesure est associé au signal auxiliaire, on peut déterminer une vitesse de variation des valeurs de déformations détectées.

De retour à la figure [Fig. 1], le premier moyen de communication sans fil 130 est prévu pour émettre le signal de mesure et le signal auxiliaire sur un réseau de communication 10.

Dans une mise en oeuvre particulière, le premier moyen de communication sans fil 130 émet le signal de mesure et le signal auxiliaire à une fréquence d'émission prédéterminée.

Dans une mise en oeuvre particulière, le premier moyen de communication sans fil 130 est choisi parmi un module de communication radiofréquence, un module de communication infrarouge, un module de communication optique, un module de communication magnétique, un module de communication par induction.

Dans une autre mise en oeuvre particulière, le réseau ce communication 10 est de type connu (par exemple, Wi-Fi^{®}, Bluetooth^{®}, ZigBee^{®}, SigFox^{®}, LoRaWan^{®}, GPRS, UMTS, LTE, WiMax, NB-IOT).

Dans la figure [Fig. 1], le premier moyen de communication sans fil 130 est compris dans un premier boitier. Dans un exemple, on fixe le premier boitier au pied d'appui 111 du silo 110 par des colliers de serrage.

Dans une mise en oeuvre particulière, comme illustré dans la figure [Fig. 3], le capteur de déformation 120 comprend en outre un connecteur 160 relié électriquement au circuit électronique 159. Dans l' invention, le connecteur 160 est prévu pour relier de manière filaire le capteur de déformation 120 au premier moyen de communication sans fil 130.

Dans la figure [Fig. 3], le capteur de déformation 120 comprend en outre un deuxième boitier 170 prévu pour renfermer la section médiane 153 du corps d'épreuve et le connecteur160, ce dernier faisant saillie du deuxième boitier 170.

Dans une mise en oeuvre particulière, le premier boitier et le deuxième boitier 170 sont formés d'au moins un matériau polymérique par exemple choisi dans le groupe formé du polyimide, des polyoléfines (notamment du polyéthylène (PE) - notamment du polyéthylène haute densité (PEHD) ou du polyéthylène basse densité (PELD) - du poly(téréphtalate d'éthylène) (PET), du polypropylène (PP), du polyéthylène naphtalate (PEN), et du copolymère cyclo-oléfine (COC)), du polyméthacrylate de méthyle (PMMA), du polycarbonate (PC), du polyétheréthercétone (PEEK), du poly(chlorure de vinyle) (PVC), de l' acrylonitrile butadiène styrène (ABS), et des polymères halogénocarbonés (notamment fluorocarbonés tels que le polytétrafluoroéthène (PTFE) et le poly(fluorure de vinylidène) (PVDF)).

Dans un autre exemple, le système 100 comprend en outre un capteur de température (non représenté) prévu pour mesurer au moins une température à proximité du pied d'appui 111 du silo 110. Le capteur de température est en outre prévu pour convertir la température en valeur de température et ajouter la valeur de température au signal de mesure.

Dans un autre exemple, le système 100 comprend en outre un capteur de géolocalisation (non représenté) relié électriquement au circuit électronique 159. Le capteur de géolocalisation est prévu pour déterminer une position géographique du capteur de déformation 120. Le capteur de géolocalisation est en outre prévu pour convertir la position géographique en valeur de position géographique et ajouter la valeur de position géographique au signal auxiliaire. De cette manière, un fournisseur de matériau en vrac peut être facilement dirigé vers le ou les silos à remplir.

Dans une variante, le système 100 ne comprend pas de capteur de géolocalisation. Dans ce cas, on peut localiser la position géographique du capteur de déformation 120 grâce aux signaux émis sur le réseau de communication 10. En effet, dans certains réseaux de communication 10, la position du premier moyen de communication sans fil 130 et du deuxième moyen de communication sans fil est connue. Dans ce cas, il est possible, par exemple, de trianguler la position d'un capteur de déformation 120 particulier en fonction des signaux émis sur le réseau de communication 10.

De retour à la figure [Fig. 1], le serveur distant 140 comprend un second moyen de communication sans fil (non représenté) et un processeur (non représenté).

Le second moyen de communication sans fil est prévu pour recevoir le signal de mesure et le signal auxiliaire.

Le processeur est prévu pour réaliser un traitement numérique du signal de mesure et du signal auxiliaire de sorte à obtenir une estimation du niveau de remplissage du silo 110 en fonction du signal de mesure et du signal auxiliaire.

Ainsi, dans l'invention, la puissance de calcul est déportée dans le serveur distant. Ce qui diffère de l'art antérieur, dans lequel le calcul est réalisé localement à proximité des capteurs.

En pratique, le processeur utilise une pluralité de signaux de mesure et de signaux auxiliaires pour déterminer une loi mathématique qui relie les variations des valeurs de déformation et un taux de remplissage du silo 110.

En particulier, la loi mathématique peut être déterminée dès le premier remplissage total du silo 110 à partir d'un état initial vide. Dans ce cas, la variation des valeurs de déformations mesurées est considérée comme une variation de 0 % à 100 % de remplissage du silo 110.

Le débit d'introduction du matériau en vrac dans le silo 110 lors de ce premier remplissage n'a pas besoin d'être constant, mais peut varier et le remplissage peut être continu ou discontinu (remplissage en plusieurs fois). La connaissance de la capacité maximale du silo 110 n'est pas nécessaire, ni celle de la masse volumique du matériau en vrac introduit dans le silo 110. Toutefois, de telles données peuvent permettre d'affiner le taux de remplissage déterminé. Lors du vidage, l' évolution de la déformation détectée par le capteur de déformation 120 et la comparaison de toute valeur correspondante à la valeur maximale détectée par le capteur de déformation 120 permet d'en déduire (à l' aide d'une loi mathématique établie en fonction des paramètres particuliers relatifs au silo 110 et à la nature du matériau en vrac notamment) un volume restant dans le silo 110 ou une valeur de taux de remplissage. Ceci permet alors, par exemple, de prévoir une alerte lorsque ce taux de remplissage s'approche de zéro ou descend par exemple au-dessous de 10 %, de 20 % ou encore de 30 %. Malgré quelques approximations, les inventeurs ont constaté, de façon surprenante, qu'un tel procédé permet d'obtenir un résultat avec une précision comprise en 2 % et 20 %, par exemple de l'ordre de 10 %, une telle précision étant largement suffisante et fiable pour la plupart des applications et industriels qui utilisent des silos montés sur pieds d' appui au sol.

Dans une autre mise en oeuvre, la loi mathématique peut être déterminée lors du remplissage/vidage du silo 110, et ce, quel que soit l'état de remplissage du silo 110. En effet, les inventeurs ont noté que le remplissage d'un silo 110 est réalisé de manière rapide, tandis que le vidage est réalisé plus lentement. Ainsi, on peut déduire une valeur maximale/minimale de remplissage du silo 110 à partir de la vitesse de variation des valeurs de déformation détectées par le capteur de déformation 120.

En pratique, la valeur maximale est associée à l'une des dernières valeurs de déformation qui précède une décélération de la vitesse de variation des valeurs de déformation détectées par le capteur de déformation 120, au-delà d'une valeur de décélération prédéterminée. En outre, la valeur minimale est associée à l'une des dernières valeurs de déformation qui précède une accélération de la vitesse de variation des déformations détectées par le capteur de déformation 120, au-delà d'une valeur d'accélération prédéterminée. De cette manière, la valeur maximale/minimale de remplissage du silo 110 peut être mise à jour à chaque remplissage/vidage du silo 110.

Dans une mise en oeuvre, le traitement numérique du signal de mesure et du signal auxiliaire par processeur comprend la détermination d'un ensemble de paramètres correctifs de l'estimation du niveau de remplissage du silo 110.

Dans un exemple, le processeur déduit des paramètres correctifs de l' estimation du niveau de remplissage du silo 110 à partir des valeurs de température comprises dans les signaux de mesure. De cette manière, l 'estimation du niveau de remplissage du silo 110 prend en considération les déformations du pied d'appui 111 du silo 110 sous l' effet de la température. En effet, dans certaines situations météorologiques, la température au niveau du pied d'appui 111 du silo 110 peut induire des déformations similaires à celles produites par un remplissage du silo 110.

Dans un autre exemple, le processeur déduit des paramètres correctifs de l'estimation du niveau de remplissage du silo 110 à partir des valeurs de déformation détectées. De cette manière, l'estimation du niveau de remplissage du silo 110 prend en considération une dérive du capteur de déformation 120 sous l'effet du temps. En effet, avec le temps, les performances d'acquisition du capteur de déformation 120 peuvent se dégrader.

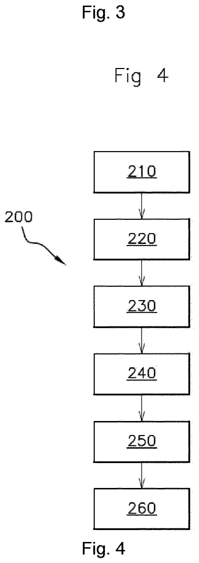

L'invention concerne également un procédé 200 de mesure du taux de remplissage du silo 110, tel qu'illustré par la figure [Fig. 4].

Dans l'étape 210, comme expliqué plus haut, on fournit le capteur de déformation 120.

Dans l'étape 220, comme expliqué plus haut, on fixe le capteur de déformation 120 sur un seul pied d'appui 111 du silo 110.

Dans l'étape 230, comme expliqué plus haut, on fournit le premier moyen de communication.

Dans l'étape 240, comme expliqué plus haut, on fixe le premier moyen de communication sur le pied d'appui 111 du silo 110.

Dans l'étape 250, comme expliqué plus haut, on raccorde de manière filaire le capteur de déformation 120 au premier moyen de communication.

Et, dans l'étape 260, on fournit le serveur distant 140.

L'invention a été présentée en référence aux domaines industriels ou agricoles. Toutefois, il est évident qu'elle s'applique dans son principe à tous les autres types de domaines qui utilisent des silos montés sur pieds d'appui au sol.

## Revendications

1. Système (100) de mesure du niveau de remplissage d'un silo (110) de stockage et de mélange d'au moins un matériau en vrac, le silo étant pourvu d'une pluralité de pieds d' appui (111) au sol, le système comprenant :
- un unique capteur (120) de déformation prévu pour être fixé sur un seul pied d' appui du silo de sorte que le capteur de déformation puisse détecter les déformations du pied d' appui en réponse à l' introduction ou à l' extraction du matériau en vrac, le capteur de déformation étant prévu pour convertir les déformations détectées en valeurs de déformation, et comprenant un circuit électronique (159) pour générer au moins un signal de mesure qui comprend les valeurs de déformation et pour générer au moins un signal auxiliaire qui est associé au signal de mesure et qui comprend un horodatage des valeurs de déformation,
- un premier moyen de communication sans fil (130) prévu pour émettre le signal de mesure et le signal auxiliaire, et
- un serveur distant (140) qui comprend un second moyen de communication sans fil et un processeur, le second moyen de communication sans fil étant prévu pour recevoir le signal de mesure et le signal auxiliaire, le processeur étant prévu pour réaliser un traitement numérique du signal de mesure et du signal auxiliaire de sorte à obtenir une estimation du niveau de remplissage du silo à partir d'une loi mathématique qui relie le taux de remplissage du silo et la variation des valeurs de déformation comprises dans le signal de mesure, ladite loi mathématique étant déterminée à partir d'une pluralité de signaux de mesure et de signaux auxiliaires.

2. Système selon la revendication 1, dans lequel le capteur de déformation comprend un connecteur (160) relié électriquement au circuit électronique, ledit connecteur étant prévu pour relier de manière filaire le capteur de déformation au premier moyen de communication sans fil.

3. Système selon la revendication 2, comprenant en outre un capteur de température prévu pour mesurer au moins une température à proximité du pied d' appui du silo, convertir la température en valeur de température et ajouter la valeur de température au signal de mesure.

4. Système selon l' une des revendications 1 à 3, comprenant en outre un capteur de géolocalisation prévu pour déterminer une position géographique du capteur de déformation, convertir la position géographique en valeur de position géographique et ajouter la valeur de position géographique au signal auxiliaire.

5. Système selon l' une des revendications 1 à 4, dans lequel le processeur détermine le niveau de remplissage du silo en fonction, en outre, d'une vitesse de variation des valeurs de déformations détectées.

6. Système selon l' une des revendications 1 à 5, dans lequel le traitement numérique du signal de mesure et du signal auxiliaire par processeur comprend la détermination d'un ensemble de paramètres correctifs qui permettent de prendre en compte l' effet de la température sur le pied d' appui du silo et l' effet du temps sur les performances d' acquisition du capteur de déformation.

7. Système selon l' une des revendications 1 à 6, dans lequel le capteur de déformation comporte un corps d' épreuve (150) qui comprend deux sections d' extrémité (151, 152) à travers lesquelles le corps d' épreuve peut être fixé au pied d' appui du silo.

8. Système selon la revendication 7, dans lequel le capteur de déformation est fixé au pied d' appui du silo par des vis.

9. Système selon l' une des revendications 1 à 8, dans lequel le capteur de déformation est fixé au pied d' appui du silo par de la colle.

10. Système selon l' une des revendications 1 à 9, comprenant en outre un boitier (170) prévu pour renfermer une section médiane du corps d' épreuve et le connecteur, le connecteur faisant saillie du boitier.

11. Procédé (200) de mesure du niveau de remplissage d' un silo (110) de stockage et de mélange d'au moins un matériau en vrac, le silo étant pourvu d'une pluralité de pieds d'appui (111) au sol, le procédé comprenant :
- une première étape de fourniture (210) d'un unique capteur (120) de déformation prévu pour être fixé sur un seul pied d'appui du silo de sorte que le capteur de déformation puisse détecter les déformations du pied d' appui en réponse à l' introduction ou à l ' extraction du matériau en vrac, le capteur de déformation étant prévu pour convertir les déformations détectées en valeurs de déformation, et comprenant un circuit électronique (159) pour générer au moins un signal de mesure qui comprend les valeurs de déformation et pour générer au moins un signal auxiliaire qui est associé au signal de mesure et qui comprend un horodatage des valeurs de déformation,
- une première étape de fixation (220) du capteur de déformation sur le pied d' appui du silo,
- une deuxième étape de fourniture (230) d'un premier moyen de communication sans fil (130) prévu pour émettre le signal de mesure et le signal auxiliaire, et
- une deuxième étape de fixation (240) du premier moyen de communication sans fil sur le pied d' appui du silo,
- une étape de raccordement (250) filaire du capteur de déformation au premier moyen de communication, et
- une troisième étape de fourniture (260) d'un serveur distant (140) qui comprend un second moyen de communication sans fil et un processeur, le second moyen de communication sans fil étant prévu pour recevoir le signal de mesure et le signal auxiliaire, le processeur étant prévu pour réaliser un traitement numérique du signal de mesure et du signal auxiliaire de sorte à obtenir une estimation du niveau de remplissage du silo à partir d'une loi mathématique qui relie le taux de remplissage du silo et la variation des valeurs de déformation comprises dans le signal de mesure, ladite loi mathématique étant déterminée à partir d'une pluralité de signaux de mesure et de signaux auxiliaires.

## Patentansprüche

1. - System (100) zum Messen des Füllstands eines Silos (110) zum Lagern und Mischen von mindestens einem Schüttgut, wobei der Silo mit einer Vielzahl von Stützfüßen (111) am Boden versehen ist, das System umfassend:
- einen einzelnen Verformungssensor (120), der bereitgestellt ist, um an einem einzelnen Stützfuß des Silos befestigt zu werden, sodass der Verformungssensor die Verformungen des Stützfußes als Reaktion auf das Einbringen oder Entnehmen des Schüttguts erfassen kann, wobei der Verformungssensor bereitgestellt ist, um die erfassten Verformungen in Verformungswerte umzuwandeln, und umfassend eine elektronische Schaltung (159) zum Erzeugen mindestens eines Messsignals, das die Verformungswerte umfasst, und zum Erzeugen mindestens eines Hilfssignals, das mit dem Messsignal assoziiert ist und das einen Zeitstempel der Verformungswerte umfasst,
- eine erste drahtlose Kommunikationseinrichtung (130), das zum Emittieren des Messsignals und des Hilfssignals bereitgestellt ist, und
- einen entfernten Server (140), der eine zweite drahtlose Kommunikationseinrichtung und einen Prozessor umfasst, wobei die zweite drahtlose Kommunikationseinrichtung bereitgestellt ist, um das Messsignal und das Hilfssignal zu empfangen, wobei der Prozessor bereitgestellt ist, um eine digitale Verarbeitung des Messsignals und des Hilfssignals durchzuführen, um eine Schätzung des Füllstands des Silos anhand eines mathematischen Gesetzes zu erlangen, das den Füllgrad des Silos und die Veränderung der Verformungswerte, die in dem Messsignal enthalten sind, miteinander verbindet, wobei das mathematische Gesetz anhand einer Vielzahl von Messsignalen und Hilfssignalen bestimmt wird.

2. - System nach Anspruch 1, wobei der Verformungssensor einen Verbinder (160) umfasst, der elektrisch mit der elektronischen Schaltung verbunden ist, wobei der Verbinder bereitgestellt ist, um den Verformungssensor drahtgebunden mit der ersten drahtlosen Kommunikationseinrichtung zu verbinden.

3. - System nach Anspruch 2, ferner umfassend einen Temperatursensor, der bereitgestellt ist, um mindestens eine Temperatur in der Nähe des Stützfußes des Silos zu messen, die Temperatur in einen Temperaturwert umzuwandeln und den Temperaturwert zu dem Messsignal hinzuzufügen.

4. - System nach einem der Ansprüche 1 bis 3, ferner umfassend einen Geolokalisierungssensor, der bereitgestellt ist, um eine geografische Position des Verformungssensors zu bestimmen, die geografische Position in einen geografischen Positionswert umzuwandeln und den geografischen Positionswert zu dem Hilfssignal hinzuzufügen.

5. - System nach einem der Ansprüche 1 bis 4, wobei der Prozessor den Füllstand des Silos ferner abhängig von einer Änderungsgeschwindigkeit der erfassten Verformungswerte bestimmt.

6. - System nach einem der Ansprüche 1 bis 5, wobei die digitale Verarbeitung des Messsignals und des Hilfssignals durch einen Prozessor die Bestimmung eines Satzes von Korrekturparametern umfasst, die es ermöglichen, die Auswirkung der Temperatur auf den Stützfuß des Silos und die Auswirkung der Zeit auf die Erfassungsleistung des Verformungssensors zu berücksichtigen.

7. - System nach einem der Ansprüche 1 bis 6, wobei der Verformungssensor einen Prüfkörper (150) aufweist, der zwei Endabschnitte (151, 152) umfasst, durch die der Prüfkörper an dem Stützfuß des Silos befestigt werden kann.

8. - System nach Anspruch 7, wobei der Verformungssensor durch Schrauben an dem Stützfuß des Silos befestigt ist.

9. - System nach einem der Ansprüche 1 bis 8, wobei der Verformungssensor durch Klebstoff an dem Stützfuß des Silos befestigt ist.

10. - System nach einem der Ansprüche 1 bis 9, ferner umfassend ein Gehäuse (170), das bereitgestellt ist, um einen Mittelabschnitt des Prüfkörpers und den Verbinder zu umschließen, wobei der Verbinder aus dem Gehäuse hervorsteht.

11. - Verfahren (200) zum Messen des Füllstands eines Silos (110) zum Lagern und Mischen von mindestens einem Schüttgut, wobei der Silo mit einer Vielzahl von Stützfüßen (111) am Boden versehen ist, das Verfahren umfassend:
- einen ersten Schritt eines Lieferns (210) eines einzelnen Verformungssensors (120), der bereitgestellt ist, um an einem einzelnen Stützfuß des Silos befestigt zu werden, sodass der Verformungssensor die Verformungen des Stützfußes als Reaktion auf das Einbringen oder Entnehmen des Schüttguts erfassen kann, wobei der Verformungssensor bereitgestellt ist, um die erfassten Verformungen in Verformungswerte umzuwandeln, und umfassend eine elektronische Schaltung (159) zum Erzeugen mindestens eines Messsignals, das die Verformungswerte umfasst, und zum Erzeugen mindestens eines Hilfssignals, das mit dem Messsignal assoziiert ist und das einen Zeitstempel der Verformungswerte umfasst,
- einen ersten Schritt eines Befestigens (220) des Verformungssensors an dem Stützfuß des Silos,
- einen zweiten Schritt eines Lieferns (230) einer ersten drahtlosen Kommunikationseinrichtung (130), das zum Senden des Messsignals und des Hilfssignals bereitgestellt ist, und
- einen zweiten Schritt eines Befestigens (240) der ersten drahtlosen Kommunikationseinrichtung an dem Stützfuß des Silos,
- einen Schritt eines drahtgebundenen Verbindens (250) des Verformungssensors mit der ersten Kommunikationseinrichtung, und
- einen dritten Schritt eines Lieferns (260) eines entfernten Servers (140), der eine zweite drahtlose Kommunikationseinrichtung und einen Prozessor umfasst, wobei die zweite drahtlose Kommunikationseinrichtung bereitgestellt ist, um das Messsignal und das Hilfssignal zu empfangen, wobei der Prozessor bereitgestellt ist, um eine digitale Verarbeitung des Messsignals und des Hilfssignals durchzuführen, um eine Schätzung des Füllstands des Silos anhand eines mathematischen Gesetzes zu erlangen, das den Füllgrad des Silos und die Veränderung der Verformungswerte, die in dem Messsignal enthalten sind, miteinander verbindet, wobei das mathematische Gesetz anhand einer Vielzahl von Messsignalen und Hilfssignalen bestimmt wird.

## Claims

1. A system (100) for measuring the filling level of a silo (110) for storing and mixing at least one bulk material, the silo being provided with a plurality of support legs (111) on the ground, the system comprising:
- a single deformation sensor (120) provided to be attached to a single support leg of the silo so that the deformation sensor can detect the deformations of the support leg in response to the introduction or extraction of the bulk material, the deformation sensor being provided to convert the detected deformations into deformation values, and comprising an electronic circuit (159) in order to generate at least one measurement signal which comprises the deformation values and to generate at least one auxiliary signal which is associated with the measurement signal and which comprises a timestamp of the deformation values,
- a first wireless communication means (130) provided to transmit the measurement signal and the auxiliary signal, and
- a remote server (140) which comprises a second wireless communication means and a processor, the second wireless communication means being provided to receive the measurement signal and the auxiliary signal, the processor being provided to effect digital processing of the measurement signal and the auxiliary signal so as to obtain an estimate of the filling level of the silo from a mathematical law which links the filling rate of the silo and the variation of the deformation values contained within the measurement signal, said mathematical law being determined from a plurality of measurement signals and auxiliary signals.

2. The system according to claim 1, wherein the deformation sensor comprises a connector (160) electrically connected to the electronic circuit, said connector being provided to make a wired connection between the deformation sensor and the first wireless communication means.

3. The system according to claim 2, further comprising a temperature sensor provided to measure at least one temperature proximate to the support leg of the silo, to convert the temperature into a temperature value and to add the temperature value to the measurement signal.

4. The system according to one of claims 1 to 3, further comprising a geolocation sensor provided to determine a geographical position of the deformation sensor, to convert the geographical position into a geographical position value and to add the geographical position value to the auxiliary signal.

5. The system according to one of claims 1 to 4, wherein the processor determines the filling level of the silo further based on a speed of variation of the detected deformation values.

6. The system according to one of claims 1 to 5, wherein the digital processing of the measurement signal and of the auxiliary signal by the processor comprises determining a set of corrective parameters which permit the effect of the temperature on the support leg of the silo and the effect of the weather on the acquisition performance of the deformation sensor to be taken into account.

7. The system according to one of claims 1 to 6, wherein the deformation sensor comprises a proof body (150) which comprises two end sections (151, 152) through which the proof body can be attached to the support leg of the silo.

8. The system according to claim 7, wherein the deformation sensor is attached to the support leg of the silo by screws.

9. The system according to one of claims 1 to 8, wherein the deformation sensor is attached to the support leg of the silo by adhesive.

10. The system according to one of claims 1 to 9, further comprising a housing (170) provided to enclose a middle section of the proof body and the connector, the connector protruding from the housing.

11. A method (200) for measuring the filling level of a silo (110) for storing and mixing at least one bulk material, the silo being provided with a plurality of support legs (111) on the ground, the method comprising:
- a first step of providing (210) a single deformation sensor (120) provided to be attached to a single support leg of the silo so that the deformation sensor can detect deformations of the support leg in response to the introduction or extraction of the bulk material, the deformation sensor being provided to convert the detected deformations into deformation values, and comprising an electronic circuit (159) in order to generate at least one measurement signal which comprises the deformation values and to generate at least one auxiliary signal which is associated with the measurement signal and which comprises a timestamp of the deformation values,
- a first step of attaching (220) the deformation sensor to the support leg of the silo,
- a second step of providing (230) a first wireless communication means (130) provided to transmit the measurement signal and the auxiliary signal, and
- a second step of attaching (240) the first wireless communication means to the support leg of the silo,
- a step of making a wired connection (250) between the deformation sensor and the first communication means, and
- a third step of providing (260) a remote server (140) which comprises a second wireless communication means and a processor, the second wireless communication means being provided to receive the measurement signal and the auxiliary signal, the processor being provided to effect digital processing of the measurement signal and the auxiliary signal so as to obtain an estimate of the filling level of the silo from a mathematical law which links the filling rate of the silo and the variation of the deformation values contained within the measurement signal, said mathematical law being determined from a plurality of measurement signals and auxiliary signals.
